# EUROPÄISCHE PATENTSCHRIFT

(11) **EP 3 112 094 B1**
(45) Veröffentlichungstag und Bekanntmachung des Hinweises auf die Patenterteilung: **12.01.2022**
(21) Anmeldenummer: 16176131.7
(22) Anmeldetag: 24.06.2016
(51) Int. Cl.: B25J 9/16, B25J 11/00, B25J 5/00

(54) **VERFAHREN ZUM STEUERN EINES MANIPULATORSYSTEMS**
METHOD FOR CONTROLLING A MANIPULATOR SYSTEM
PROCÉDÉ DE COMMANDE D'UN SYSTÈME DE MANIPULATION

(30) Priorität: 30.06.2015 DE 102015212171
(43) Veröffentlichungstag der Anmeldung: 04.01.2017
(73) Patentinhaber: KUKA Deutschland GmbH, 86165 Augsburg (DE)
(72) Erfinder: KOGAN, Yevgen, 86152 Augsburg (DE)
(74) Vertreter: Mader, Joachim

(56) Entgegenhaltungen:
- WO-A1-2014/045407
- US-A- 4 536 690
- US-A- 5 737 500
- US-A1- 2004 257 022
- US-A1- 2004 257 022
- US-A1- 2006 012 322
- US-A1- 2008 150 467
- US-A1- 2015 012 163

## Beschreibung

### Gebiet der Erfindung

Die Erfindung betrifft ein Verfahren zum Steuern eines Manipulatorsystems, welches Verfahren es ermöglicht, die Anzahl der benötigten Antriebskomponenten zu reduzieren. Die Erfindung betrifft weiter ein Manipulatorsystem mit einer reduzierten Anzahl an Antriebskomponenten.

### Hintergrund der Erfindung

Manipulatorsysteme umfassen typischerweise mindestens einen Manipulator, der mittels z.B. einer Manipulatorsteuerungsvorrichtung gesteuert wird. Ein Manipulator ist dabei ein Gerät, welches die physikalische Interaktion mit der Umgebung ermöglicht. Dazu ist der Manipulator mit zumindest einem Antrieb, wie insbesondere Elektromotoren, ausgestattet. Mittels des Antriebs kann eine Bewegungsachse des Manipulators bewegt werden. Typischerweise umfasst der Manipulator mehrere Antriebe und mehrere Bewegungsachsen. Beispielsweise kann ein Manipulator ein Industrieroboter sein, wobei ein Industrieroboter ein automatisch geführter, frei programmierbarer Mehrzweck-Manipulator ist, der in drei oder mehr Achsen programmierbar ist und zur Verwendung in der Automatisierungstechnik entweder an einem festen Ort oder beweglich angeordnet sein kann.

Eine bewegliche Manipulatoranordnung kann beispielsweise über eine mobile Plattform realisiert werden, die etwa an einer Linearachse o.ä. geführt sind. Außerdem können mobile Plattformen dazu verwendet werden, um daran eingerichtete Manipulatoren frei in einer Ebene zu bewegen, indem die Plattformen mit entsprechenden flexiblen Antriebsmitteln ausgerüstet sind. Hierzu sind die Antriebe der mobilen Plattform zweckmäßig mit Rädern, Ketten, Raupen oder ähnlichen bekannten Vorrichtungen ausgestattet.

Typischerweise sind die in Manipulatorsystemen verwendeten Antriebe elektrische Maschinen, wie Elektromotoren. Um einen solchen Antrieb anzusteuern, wird ein Bewegungsbefehl von einem Umrichter in ein Ansteuersignal gewandelt. Umrichter sind Stromrichter, die aus einer Wechselspannung (bzw. Wechselstrom) eine in der Frequenz und Amplitude variable Wechselspannung (bzw. Wechselstrom) generieren. Diese Wechselspannung (bzw. Wechselstrom) kann der direkten Versorgung einer elektrischen Maschine, wie beispielsweise eines Elektromotors, dienen. Mittels eines Umrichters kann eine elektrische Maschine drehzahlgeregelt oder drehmomentgeregelt betrieben werden. In bekannten Manipulatorsystemen ist jedem Antrieb ein eigener Umrichter zugeordnet. Jeder Antrieb wird folglich von einem Umrichter angesteuert und so beispielsweise eine Bewegungsachse einer mobilen Plattform oder eines Manipulators mittels des angesteuerten Antriebs gezielt bewegt.

Einige Manipulatorsysteme weisen mehrere Antriebsgruppen auf, welche üblicherweise nur abwechselnd und somit nicht gleichzeitig angesteuert werden. Beispielsweise werden bei beweglich angeordneten Manipulatoren häufig die Bewegungsachsen der mobilen Plattform nur dann bewegt, wenn die Bewegungsachsen des Manipulators stillstehen, also wenn z.B. der Manipulator mittels der mobilen Plattform zu einem neuen Arbeitsort bewegt wird. Ebenso werden die Bewegungsachsen des Manipulators typischerweise erst dann bewegt, wenn die Bewegungsachsen der mobilen Plattform stillstehen, also wenn z.B. der Manipulator an seinem neuen Arbeitsort positioniert und ausgerichtet ist.

Die Verwendung von einem Umrichter für jeden anzusteuernden Antrieb des Manipulatorsystems verursacht Kosten, und die Umrichter benötigen Bauraum und gegebenenfalls geeignete Kühlsysteme, welche ebenfalls zusätzliche Kosten verursachen und zusätzlichen Bauraum benötigen. Es ist daher die Aufgabe der vorliegenden Erfindung die genannten Nachteile auszuräumen.

US 2004/0 257 022 A1 betrifft ein System zur Steuerung einer Vielzahl von Motoren, das einen Wechselrichter mit mindestens drei Zweigen umfasst. Das System umfasst einen ersten Motor und einen zweiten Motor. Ein Controller führt ein Verfahren zur Steuerung des ersten Motors und des zweiten Motors mit einer Fehler-Arbiter-Funktion aus.

US 2015/0 012 163 A1 betrifft ein autonomes mobiles System, das ein Mittel zur Erzielung von Mobilität, ein Mittel zur Navigation, ein Mittel zur Bereitstellung von autonomer Energie und ein Mittel zur Bereitstellung von allgemeiner Datenverarbeitung umfasst.

US 2013/0 006 422 A1 betrifft eine Steuervorrichtung und Steuerverfahren für Roboter. Eine Begrenzungseinheit dient der Ausgabe eines gewünschten Gelenkdrehmoments. Ein Aktuator eines Gelenks eines Roboters wird in Übereinstimmung mit einem modifizierten gewünschten Gelenkdrehmoment gesteuert, so dass der Roboter so gesteuert werden kann, dass er auch beim Umschalten zwischen Dynamikparametern angehalten bleibt.

### Ausführliche Beschreibung der Erfindung

Die erfindungsgemäße Aufgabe wird gelöst durch ein Verfahren zum Steuern eines Manipulatorsystems nach Anspruch 1 und ein Manipulatorsystem nach Anspruch 9.

Insbesondere wird die Aufgabe gelöst durch ein Verfahren zum Steuern eines Manipulatorsystems, wobei das Manipulatorsystem mehrere Antriebe umfasst, und wobei das Manipulatorsystem weiterhin einen ersten Umrichter zum Ansteuern von zumindest zwei Antrieben aufweist, wobei der Umrichter nur ein Ansteuersignal erzeugt. Dabei weist das Verfahren die folgenden Verfahrensschritte auf:
a) Ermitteln der Antriebe, die zur Ausführung einer geplanten Bewegungsbahn des Manipulatorsystems verwendet werden müssen;
b) Prüfen, ob ein ermittelter Antrieb, der bei der geplanten Bewegungsbahn des Manipulatorsystems verwendet werden muss, von dem ersten Umrichter bestromt wird, und Verschalten des ersten Umrichters auf den zu verwendenden Antrieb, wenn dieser nicht bestromt wird; und
c) Ansteuern des bzw. der mit dem ersten Umrichter verschalteten Antriebs bzw. Antriebe mittels des ersten Umrichters, um die geplante Bewegungsbahn des Manipulatorsystems abzufahren, wobei in einem ersten Fall die zumindest zwei Antriebe abwechselnd angesteuert werden, und wobei
in einem zweiten Fall die zumindest zwei Antriebe simultan bewegt werden, wobei in diesem zweiten Fall die Antriebe abhängig voneinander bewegt werden, wobei im zweiten Fall jeder der n Antriebe mit maximal 1/n der Leistung des Umrichters betrieben wird.

Ein Manipulatorsystem umfasst typischerweise zumindest einen Manipulator, wobei der Manipulator vorzugsweise einen Manipulatorarm mit mehreren Gliedern aufweist, zumindest jedoch ein angetriebenes Glied. Weiterhin kann das Manipulatorsystem eine mobile Plattform umfassen, auf oder an welcher der Manipulator vorzugsweise eingerichtet ist.

Beispielsweise umfasst ein Manipulatorsystem eine mobile Plattform und einen Manipulator. Beispielhafte Manipulatorsysteme, welche einen Manipulator und eine mobile Plattform umfassen sind Hubsysteme, Assistenz-Manipulatorsysteme, welche beispielsweise bewegungseingeschränkte Menschen unterstützen und/oder beweglich angeordnete Industrieroboter, wie beispielsweise die OMNIROB-Systeme der KUKA AG. Beispielsweise weisen typische Hubsysteme einen Manipulator auf, der im Wesentlichen als Hubzylinder ausgebildet ist. Beim Anheben eines Objekts mittels eines solchen Hubsystems wird zunächst das Hubsystem zumindest teilweise mittels einer mobilen Plattform unter dem anzuhebenden Objekt positioniert. Anschließend wird die mobile Plattform stillgesetzt, bspw. durch geeignete Bremsen an den Achsen, und das anzuhebende Objekt anschließend durch Ausfahren des Hubzylinders angehoben. Nach Abschluss der Hubbewegung wird bspw. der Manipulator (der Hubzylinder) stillgesetzt und die mobile Plattform bewegt, um das angehobene Objekt zu verfahren.

Die Bewegungsbahn eines Manipulatorsystems bestimmt eine definierte Bewegung eines Bezugspunktes im kartesischen Raum. Eine vollständige Bewegungsbahn des Manipulatorsystems kann sich aus mehreren Bewegungsbahnen zusammensetzen. Durch eine entsprechende Bewegung der Bewegungsachsen des Manipulators und/oder der mobilen Plattform kann die gewünschte bzw. programmierte Bewegungsbahn des Manipulatorsystems abgefahren werden. Die Bewegungsachsen des Manipulators und/oder der mobilen Plattform werden bewegt, indem der Umrichter, welcher dem Antrieb der entsprechenden Bewegungsachse zugeordnet ist, diesen Antrieb ansteuert. Das Ansteuern umfasst in diesem Fall das Bereitstellen einer in Frequenz und/oder Amplitude veränderbaren Wechselspannung bzw. eines veränderbaren Wechselstroms.

Mittels des ersten Umrichters zum Ansteuern von zumindest zwei Antrieben können in einem ersten Fall die zumindest zwei Antriebe abwechselnd, d.h. nicht gleichzeitig, angesteuert werden. Der Antrieb, welcher nicht angesteuert wird, steht still bzw. bewegt sich nicht und wird vorzugsweise durch eine mechanische Bremse festgesetzt bzw. gesichert. In einem zweiten Fall können die zumindest zwei Antriebe simultan, d.h. gleichzeitig bewegt werden. In diesem zweiten Fall werden die Antriebe abhängig voneinander bewegt, da der Umrichter nur ein Ansteuersignal (d.h. eine in Frequenz und Amplitude veränderbare Wechselspannung/-strom) erzeugt. Zu beachten ist hierbei, dass die zwei simultan angesteuerten Antriebe im zweiten Fall nicht mit der maximalen Leistung des Umrichters betrieben werden, da die Leistung des Umrichters auf die simultan angesteuerten Antriebe verteilt wird. Werden beispielsweise "n" Antriebe simultan angesteuert, so kann jeder Antrieb mit maximal 1_{/}n der Leistung des Umrichters betrieben werden. Für die Mehrzahl der Manipulatoranwendungen ist es daher vorteilhaft, dass der Umrichter auf genau einen Antrieb verschaltet wird, da er nur dann mit seiner vollen Leistung Bewegungen des Manipulators bewirken kann.

Gemäß dem ersten und/oder zweiten Fall kann durch die Ansteuerung der Antriebe mittels des ersten Umrichters zumindest ein Umrichter, d.h. eine Antriebskomponente eingespart werden. Dies reduziert die Kosten und den nötigen Bauraum des Manipulatorsystems.

Die Erfindung macht es sich zu Nutze, dass die geplante Bewegungsbahn vor dem Abfahren der Bewegungsbahn mittels des Manipulatorsystems grundsätzlich bekannt ist, nämlich z.B. aus der Manipulatorsteuerung. Somit können die Antriebe des Manipulatorsystems bzw. des Umrichters, die zur Ausführung einer geplanten Bewegungsbahn des Manipulatorsystems verwendet werden müssen, bereits unmittelbar nach dem Planen bzw. der Programmierung der Bewegungsbahn ermittelt werden. Spätestens muss das Ermitteln der Antriebe abgeschlossen sein, wenn mit dem Abfahren der Bewegungsbahn begonnen wird. Dabei kann eine Bewegungsbahn auch aus mehreren (Teil-)Bewegungsbahnen bestehen, wobei das Ermitteln der benötigten Antriebe dann erst abgeschlossen sein muss, wenn mit dem Abfahren der (ersten) Teilbewegungsbahn begonnen wird.

Um einen Antrieb mittels eines Umrichters anzusteuern, wird der Antrieb vom Umrichter bestromt. Das Prüfen, ob der Antrieb, der bei der geplanten Bahnbewegung des Manipulatorsystems verwendet werden muss, von dem ersten Umrichter bestromt wird, ermöglicht ein schnelles und effizientes Ansteuern der Antriebe, da nur dann umgeschaltet bzw. verschaltet werden muss, wenn der zu verwendende Antrieb nicht ohnehin bereits bestromt wird.

Vorzugsweise umfasst das Manipulatorsystem weiter zumindest einen Manipulator, wobei der Manipulator ein mobiler Manipulator ist und auf einer mobilen Plattform des Manipulatorsystems angeordnet ist, wobei die mobile Plattform in zumindest einer Richtung und bevorzugt in einer Ebene bewegbar ist und zumindest einen Antrieb umfasst, der von dem ersten Umrichter zum Ansteuern von zumindest zwei Antrieben angesteuert werden kann.

Umfasst die mobile Plattform zumindest einen Antrieb, der von dem ersten Umrichter angesteuert werden kann, so kann der Umrichter einen Antrieb der mobilen Plattform ansteuern, wenn eine Bewegungsachse der mobilen Plattform bewegt werden soll. Beispielsweise kann so durch Ansteuern des Antriebs mittels des ersten Umrichters die mobile Plattform zusammen mit dem Manipulator bewegt werden. Ist der zweite Antrieb der von dem ersten Umrichter angesteuert werden kann ein Antrieb, welcher einer Bewegungsachse des Manipulators zugeordnet ist, so wird die Bewegungsachse des Manipulators währenddessen stillgesetzt und kann dann erst bewegt werden, wenn die dem Umrichter zugeordnete Bewegungsachse der mobilen Plattform stillsteht. Auf diese Weise kann zumindest ein Umrichter eingespart werden und damit die Kosten und der benötigte Bauraum des Manipulatorsystems reduziert werden.

Vorzugsweise ist jedem der zumindest zwei Antriebe eine Bewegungsachse des Manipulatorsystems zugeordnet, und der Schritt a) des Verfahrens umfasst das Bestimmen der Achswinkel der Bewegungsachsen (A1 - A7, B1 - B4; C1, C2, D1, D2) die den Antrieben (51, 52, 61, 62) des ersten Umrichters zugeordnet sind, in zumindest einem ersten und einem zweiten Bahnpunkt der geplanten Bewegungsbahn des Manipulatorsystems; und das Ermitteln, ob sich die Achswinkel der Bewegungsachsen (A1 - A7, B1 - B4; C1, C2, D1, D2) im ersten Bahnpunkt vom zweiten Bahnpunkt unterscheiden

Wird das Ermitteln der Antriebe, die zur Ausführung einer geplanten Bewegungsbahn des Manipulatorsystems verwendet werden müssen (d.h. Schritt a), mittels der Achswinkel der Bewegungsachsen des Manipulatorsystems durchgeführt, so können die zu verwendenden Antriebe aus der geplanten Bewegungsbahn bestimmt werden. Vorzugsweise werden bei der Planung der Bewegungsbahn mehrere Bahnpunkte im Raum definiert. Diese Bahnpunkte sollen vorzugsweise nacheinander vom Manipulatorsystem angefahren werden, so dass sich die geplante Bewegungsbahn ergibt. Vorzugsweise definiert jeder dieser Bahnpunkte die Stellung der Bewegungsachsen des Manipulatorsystems. Die Stellung einer Bewegungsachse entspricht dabei typischerweise dem Achswinkel. Ändert sich der Achswinkel einer Bewegungsachse von einem ersten Bahnpunkt zu einem zweiten Bahnpunkt nicht, so muss die Bewegungsachse auf der Bewegungsbahn von diesem ersten Bahnpunkt zum zweiten Bahnpunkt nicht bewegt werden und der Antrieb dementsprechend nicht angesteuert bzw. bestromt werden.

Beim Ansteuern des zugehörigen Antriebs können die zumindest zwei Antriebe abwechselnd, d.h. nicht gleichzeitig, angesteuert werden. In diesem ersten Fall können die Antriebe unabhängig voneinander bewegt werden. Der Antrieb, welcher nicht angesteuert wird, bewegt sich nicht. Beispielsweise kann so zunächst die mobile Plattform bewegt werden und anschließend kann eine Bewegungsachse des Manipulators bewegt werden.

Nachdem die Ermittlung der Änderung der Achswinkel erfolgt ist, werden in Schritt c) vorzugsweise die mit dem ersten Umrichter verschalteten Antriebe simultan durch den ersten Umrichter angesteuert, wenn sich die Achswinkel in Betrag und Richtung gleichartig ändern.

Ändert sich der Achswinkel einer ersten Bewegungsachse von einem ersten Bahnpunkt zu einem zweiten Bahnpunkt in Betrag und Richtung gleichartig wie der Achswinkel einer zweiten Bewegungsachse, ist es häufig möglich die zwei Antriebe simultan mit demselben Umrichter zu bewegen. In diesem zweiten Fall werden die Antriebe abhängig voneinander bewegt, da der Umrichter nur ein Ansteuersignal (in Frequenz und Amplitude veränderbare Wechselspannung/-strom) erzeugt. Die zumindest zwei Antriebe (z.B. "n" Antriebe, wobei "n" eine natürliche Zahl ist) werden in diesem Fall folglich mit maximal 1/n der Leistung des Umrichters betrieben. Ist die mobile Plattform eines Manipulatorsystems beispielsweise mit zwei differentiell angetriebenen Rädern ausgestattet, so kann durch das simultane Ansteuern der Antriebe der Räder die mobile Plattform geradeaus bewegt werden. Durch das simultane Ansteuern weisen die angesteuerten Räder die gleiche Drehzahl und das gleiche Drehmoment auf, da der Umrichter nur ein Ansteuersignal erzeugt, das beiden Antrieben zugeführt wird.

Vorzugsweise kann der zumindest eine, dem Manipulatorsystem zugeordnete Umrichter zumindest drei, bevorzugt zumindest vier und am bevorzugtesten zumindest sechs Antriebe ansteuern. Kann der Umrichter mehrere Antriebe ansteuern, so kann die Anzahl der benötigten Umrichter weiter reduziert werden. Somit können Kosten und Bauraum des Manipulatorsystems weiter reduziert werden.

Vorzugsweise ist jedem der dem ersten Umrichter zugeordneten Antriebe eine Bewegungsachse des Manipulatorsystems zugeordnet, wobei die jeweilige Bewegungsachse mechanisch blockiert wird, wenn der der jeweiligen Bewegungsachse zugeordnete Antrieb nicht von dem ersten Umrichter angesteuert wird.

Wird der Antrieb, welcher nicht vom Umrichter angesteuert wird, mechanisch blockiert, so kann eine ungeplante Bewegung, wie etwa das Absacken der dem Antrieb zugeordneten Bewegungsachse verhindert werden. Das Absacken einer Bewegungsachse kann beispielsweise durch die Gewichtskraft oder durch andere auf das Manipulatorsystem wirkende externe Kräfte erfolgen. Eine mechanische Blockierung hat den Vorteil, dass nach dem Blockieren dem Antrieb keine Energie mehr zugeführt werden muss, um bspw. das Absacken zu verhindern. Somit kann das Manipulatorsystem energieeffizient betrieben werden.

Vorzugsweise ist dem Manipulatorsystem weiterhin zumindest ein zweiter Umrichter zum Ansteuern von zumindest zwei Antrieben zugeordnet. Durch das Vorsehen von zumindest zwei Umrichtern zum Ansteuern von je zumindest zwei Antrieben, können weitere Umrichter eingespart werden. Vorzugsweise kann der zweite Umrichter wie der erste Umrichter verwendet werden.

Insbesondere wird die Aufgabe auch gelöst durch ein Manipulatorsystem umfassend: eine Manipulatorsteuerungsvorrichtung, welche dazu eingerichtet ist, die oben beschriebenen Verfahren auszuführen; zumindest einen Manipulator, wobei der Manipulator mehrere Antriebe umfasst, wobei die Antriebe Elektromotoren sind; und einen ersten Umrichter, wobei der erste Umrichter zum Ansteuern von zumindest zwei Antrieben des Manipulatorsystems eingerichtet ist.

Vorzugsweise umfasst das Manipulatorsystem weiterhin eine mobile Plattform, der zumindest ein Antrieb zugeordnet ist, und der erste Umrichter ist zum Ansteuern von einem Antrieb des Manipulators und einem Antrieb der mobilen Plattform eingerichtet.

Ist der erste Umrichter zum Ansteuern von einem Antrieb des Manipulators und einem Antrieb der mobilen Plattform eingerichtet, so kann mit nur einem Umrichter ein Antrieb der mobilen Plattform angesteuert werden und die mobile Plattform in Folge dessen bewegt werden. Falls der Antrieb der mobilen Plattform nicht angesteuert wird, kann ein Antrieb einer Bewegungsachse des Manipulators angesteuert und somit bewegt werden. Vorzugsweise umfasst das Manipulatorsystem weiterhin eine mobile Plattform, der zumindest zwei Antriebe zugeordnet sind, wobei der Manipulator zumindest zwei Antriebe umfasst und wobei der erste Umrichter zum Ansteuern von zumindest einem Antrieb des Manipulators und zumindest einem Antrieb der mobilen Plattform eingerichtet ist. Das Manipulatorsystem umfasst weiterhin vorzugsweise einen zweiten Umrichter, der zum Ansteuern von zumindest einem weiteren Antrieb des Manipulators und zumindest einem weiteren Antrieb der mobilen Plattform eingerichtet ist.

Umfasst die mobile Plattform zumindest zwei Antriebe, und ist jeder Antrieb einer Bewegungsachse, wie beispielsweise einem Rad der mobilen Plattform zugeordnet, so kann die mobile Plattform durch geeignete Ansteuerung der Räder frei in einer Ebene bewegt werden.

### Ausführliche Beschreibung der Figuren

Im Folgenden werden die Figuren näher erläutert. Dabei zeigt
- Fig. 1: eine schematische Darstellung eines ersten Manipulatorsystems;
- Fig. 2: eine schematische Darstellung eines zweiten Manipulatorsystems;
- Fig. 3: ein schematisches Schaltdiagramm zum Ansteuern von Antrieben;
- Fig. 4: ein schematisches Schaltdiagramm zum Ansteuern von Antrieben; und
- Fig. 5: ein schematisches Ablaufdiagramm des Verfahrens.

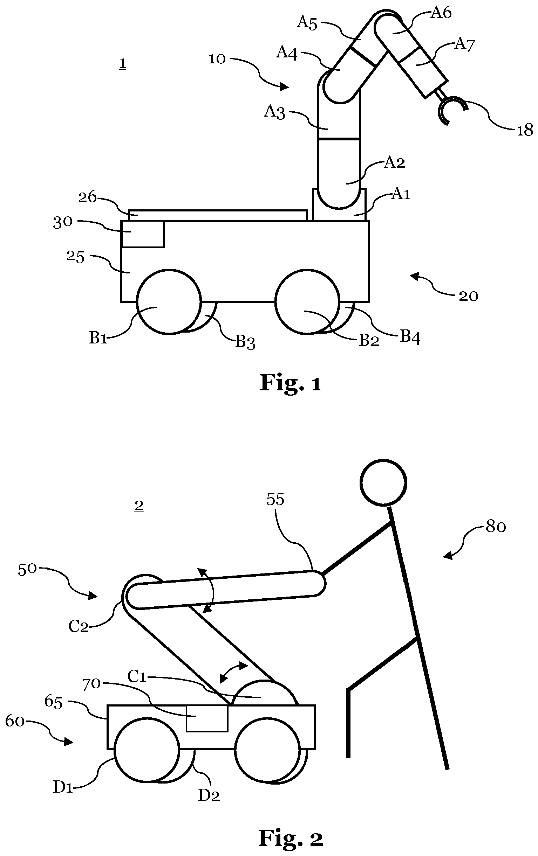

Fig. 1 zeigt schematisch ein Manipulatorsystem 1, welches einen Manipulator 10 und eine mobile Plattform 20 sowie eine Manipulatorsteuerungsvorrichtung 30 umfasst. Der Manipulator 10 ist ein Manipulatorarm der auf der mobilen Plattform 20 angeordnet ist. Der Manipulator 10 umfasst sieben Bewegungsachsen A1 bis A7. Jeder Bewegungsachse A1 bis A7 ist ein Antrieb (nicht dargestellt) zugeordnet. Die mobile Plattform 20 umfasst einen Hauptkörper 25 sowie eine Oberseite 26. Weiterhin umfasst die mobile Plattform 20 vier Bewegungsachsen B1 bis B4, welche als Räder und vorzugsweise als Mecanum-Räder ausgebildet sind. Auch hier ist jeder der vier Bewegungsachsen B1 bis B4 ein Antrieb zugeordnet. Das Manipulatorsystem 1 umfasst daher elf Antriebe. Auf der Oberseite 26 können Objekte abgelegt werden, die vom Greifer 18 des Manipulators 10 gegriffen werden können. Vorzugsweise umfasst das Manipulatorsystem 1 zumindest vier Umrichter, welche jeweils zumindest zwei Antriebe ansteuern können, sowie drei herkömmliche Umrichter, die je nur einen Antrieb ansteuern können. Somit können die elf Antriebe mit nur sieben Umrichtern gesteuert werden und es können vier Umrichter eingespart werden.

Fig. 2 zeigt eine schematische Darstellung eines zweiten Manipulatorsystems 2, welches ein Assistenz-Manipulatorsystem ist und beispielsweise dazu eingerichtet ist, bewegungseingeschränkte Menschen 80 zu unterstützen. Das Manipulatorsystem 2 umfasst einen Manipulator 50 und eine mobile Plattform 60 sowie eine Manipulatorsteuerungsvorrichtung 70. Der Manipulator 50 umfasst zwei Bewegungsachsen C1 und C2, welchen jeweils ein Antrieb (nicht dargestellt) zugeordnet ist. Weiterhin umfasst der Manipulator 50 einen Griff 55, welcher dazu eingerichtet ist, einen bewegungseingeschränkten Menschen zu stützen. Durch die Bewegungsachsen C1 und C2 kann beispielsweise die Höhe des Griffs 55 verstellt werden. Die mobile Plattform 60 umfasst einen Hauptkörper 65 sowie die Bewegungsachsen D1 und D2, welchen jeweils ein Antrieb zugeordnet ist. Den Bewegungsachsen D1 und D2 sind Räder zugeordnet. Werden beispielsweise die Antriebe der Bewegungsachsen D1 und D2 simultan angesteuert, so bewegt sich die mobile Plattform 60 geradeaus.

Alternativ kann der Griff 55 ein geteilter Griff sein und beispielsweise je einen separaten Griff für die linke und die rechte Hand eines bewegungseingeschränkten Menschen 80 bereitstellen. Beispielsweise können die Griffe für die linke und die rechte Hand von je einem Antrieb (nicht dargestellt) des Manipulators 50 angesteuert werden, um die Höhe des Griffs für die linke und die rechte Hand individuell verstellen zu können.

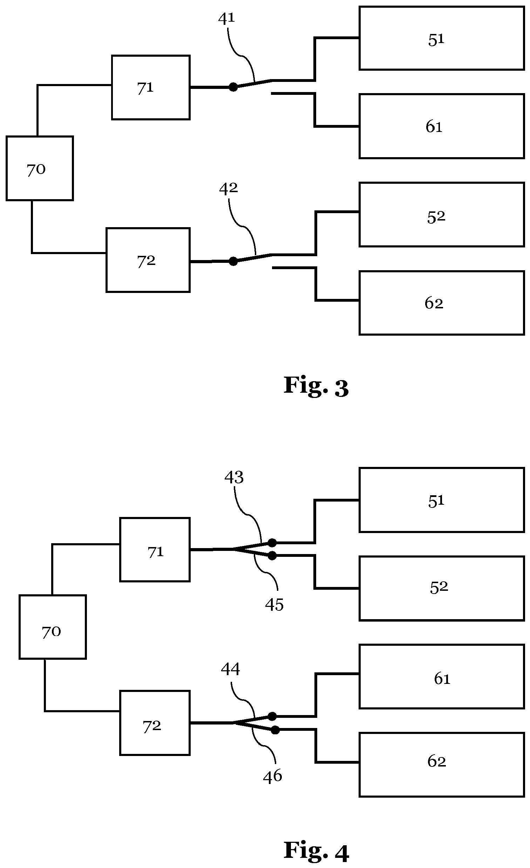

Vorzugsweise umfasst das Manipulatorsystem 2 zumindest zwei Umrichter, welche jeweils zumindest zwei Antriebe ansteuern können. Beispielsweise kann jeder der Umrichter zum Ansteuern von je einem Antrieb des Manipulators und einem Antrieb der mobilen Plattform eingerichtet sein. Somit ergeben sich unterschiedliche Ansteuerungsvarianten der Antriebe des Manipulatorsystems 2, welche in den Figuren 3 und 4 schematisch dargestellt sind.

In den Figuren 3 und 4 bezeichnet das Bezugszeichen 70 die Manipulatorsteuerungsvorrichtung 70 des Manipulatorsystems 2. Die Bezugszeichen 71 und 72 bezeichnen Umrichter, die dem Manipulatorsystem 2 zugeordnet sind. Die Bezugszeichen 51 und 52 bezeichnen Antriebe des Manipulators 50 und die Bezugszeichen 61 und 62 bezeichnen Antriebe der mobilen Plattform 60 des Manipulatorsystems 2. Dem Fachmann ist klar, dass die folgende beispielhafte Beschreibung analog auch für das Manipulatorsystem 1 gilt, dass sich im Wesentlichen nur durch die höhere Anzahl an Bewegungsachsen unterscheidet.

Fig. 3 zeigt ein schematisches Schaltdiagramm zum Ansteuern von Antrieben 51, 52, 61, 62, welches beispielsweise für das Manipulatorsystem 2 verwendet werden kann. Fig. 3 zeigt einen Zustand, in welchem die Umrichter 71, 72 mittels der Schalter 41, 42 mit den Antrieben 51, 52 des Manipulators 50 verschaltet sind. Folglich können in diesem Zustand die Antriebe 51, 52 unabhängig voneinander bestromt und angesteuert werden. Im Falle des Manipulatorsystems 2 kann so beispielsweise die Höhe des Griffs 55 verstellt werden. Wird die Stellung der Schalter 41, 42 geändert, so können die Antriebe 61, 62 der mobilen Plattform 60 angesteuert werden. Die Bewegungsachsen C1 und C2 sind nun unbeweglich und z.B. mittels einer mechanischen Bremse blockiert, so dass der Griff 55 auf der eingestellten Höhe verbleibt. Nun kann die mobile Plattform 60 gemäß den Befehlen der Manipulatorsteuerungsvorrichtung frei bewegt werden.

Fig. 4 zeigt ein schematisches Schaltdiagramm zum Ansteuern von Antrieben 51, 52, 61, 62, welches ebenfalls beispielsweise für das Manipulatorsystem 2 verwendet werden kann. Im gezeigten Schaltdiagramm können die Umrichter 71, 72 simultan zumindest jeweils zwei Antriebe 51, 52, 61, 62 ansteuern. Dazu werden die Schalter 43, 44, 45, 46 geschlossen und jeder Umrichter mit zwei Antrieben verschaltet. Im gezeigten Beispiel ist der Umrichter 71 mit den Antrieben 51 und 52 des Manipulators 50 verschaltet und der Umrichter 72 mit den Antrieben 61 und 62 der mobilen Plattform 60. Durch geeignetes simultanes Ansteuern der Antriebe kann die mobile Plattform 60 gleichzeitig in eine erste Richtung bewegt und der Griff 55 z.B. nach oben verstellt werden. Somit kann für einen bewegungseingeschränkten Menschen 80 eine Art Aufstehhilfe bereitgestellt werden. Die Verschaltung des Umrichters 72 mit beiden Antrieben 61 und 62 der mobilen Plattform bewirkt, dass beide Bewegungsachsen D1 und D2 simultan betrieben werden, d.h. die mobile Plattform lässt sich auf diese Art und Weise bspw. nur geradeaus bewegen, was für die Anwendung als Aufstehhilfe jedoch ausreichend ist. Um im gezeigten Beispiel auch Kurvenfahrten zu ermöglichen, ist die Konfiguration der Fig. 3 jedoch besser geeignet.

Selbstverständlich ist es auch möglich mittels geeigneter Schalter die Schaltungsvarianten der Figuren 3 und 4 zu kombinieren, so dass bspw. der Umrichter 71 entweder nur mit einem Antrieb 51 oder 52 verschaltet werden kann oder mit beiden Antrieben 51 und 52 gleichzeitig, d.h. simultan.

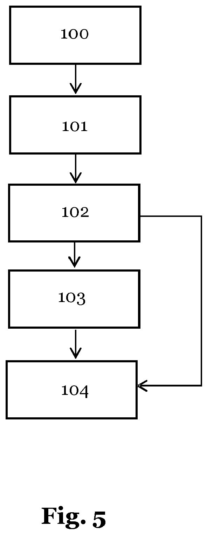

Fig. 5 zeigt ein schematisches Ablaufdiagramm eines Verfahrens zum Steuern eines Manipulatorsystems 1 oder 2. Im Schritt 100 wird zunächst eine Bewegungsbahn des Manipulatorsystems geplant. Die Bewegungsbahn kann sich dabei aus mehreren einzelnen Bewegungsbahnen zusammensetzen. Vorzugsweise umfasst eine Bewegungsbahn zumindest zwei Bahnpunkte. In Schritt 101 erfolgt die Ermittlung der dem Umrichter, wie beispielsweise dem Umrichter 71 oder 72, zugeordneten Antriebe des Manipulatorsystems, die zur Ausführung der geplanten Bewegungsbahn des Manipulatorsystems verwendet werden müssen. Hierzu werden in Schritt 101 z.B. die Änderungen der Achswinkel der Bewegungsachsen A1 bis A7, B1 bis B4; C1, C2, D1, D2, die den Antrieben des ersten Umrichters zugeordnet sind, von einem ersten Bahnpunkt zu einem zweiten Bahnpunkt der geplanten Bewegungsbahn des Manipulatorsystems ermittelt. In Schritt 102 wird dann geprüft, ob ein ermittelter Antrieb, der bei der geplanten Bewegungsbahn des Manipulatorsystems verwendet werden muss, von dem Umrichter aktuell bestromt wird. Ist dies nicht der Fall erfolgt bei Schritt 103 ein Verschalten des Umrichters auf den zu verwendenden Antrieb. In Schritt 104 erfolgt dann die Ansteuerung des bzw. der mit dem Umrichter verschalteten Antriebs bzw. Antriebe mittels des Umrichters, um die geplante Bewegungsbahn des Manipulatorsystems abzufahren.

### Bezugszeichenliste

- 1, 2: Manipulatorsystem
- 10: Manipulator
- 18: Endeffektor
- 20: mobile Plattform
- 25: Hauptkörper
- 26: Oberseite
- 30, 70: Manipulatorsteuerungsvorrichtung
- 71,72: Umrichter
- 41, 42, 43, 44, 45,: Schalter
- 46 50: Manipulator
- 51, 52: Antriebe des Manipulators 50
- 55: Griff
- 60: mobile Plattform
- 61, 62: Antriebe der mobilen Plattform 60
- 65: Hauptkörper
- 80: Nutzer
- A1 bis A7: Bewegungsachsen des Manipulators 10
- B1 bis B4: Bewegungsachsen der mobilen Plattform 20
- C1, C2: Bewegungsachsen des Manipulators 50
- D1, D2: Bewegungsachsen der mobilen Plattform 60

## Patentansprüche

1. Verfahren zum Steuern eines Manipulatorsystems (1; 2), wobei das Manipulatorsystem (1; 2) mehrere Antriebe umfasst, und wobei das Manipulatorsystem (1; 2) weiterhin einen ersten Umrichter (71, 72) zum Ansteuern von zumindest zwei Antrieben (51, 52, 61, 62) aufweist, wobei der Umrichter (71, 72) nur ein Ansteuersignal erzeugt, und wobei das Verfahren die folgenden Verfahrensschritte umfasst:
a)Ermitteln (101) der Antriebe (51, 52, 61, 62), die zur Ausführung einer geplanten Bewegungsbahn des Manipulatorsystems (1; 2) verwendet werden müssen;
b) Prüfen, ob ein ermittelter Antrieb (51, 52, 61, 62), der bei der geplanten Bewegungsbahn des Manipulatorsystems (1; 2) verwendet werden muss, von dem ersten Umrichter (71, 72) bestromt wird, und Verschalten des ersten Umrichters (71, 72) auf den zu verwendenden Antrieb (51, 52, 61, 62), wenn dieser nicht bestromt wird, und
c)Ansteuern (103) des bzw. der mit dem ersten Umrichter verschalteten Antriebs bzw. Antriebe (51, 52, 61, 62) mittels des ersten Umrichters (71, 72), um die geplante Bewegungsbahn des Manipulatorsystems (1; 2) abzufahren, wobei
in einem ersten Fall die zumindest zwei Antriebe (51, 52, 61, 62) abwechselnd angesteuert werden, und wobei
in einem zweiten Fall die zumindest zwei Antriebe (51, 52, 61, 62) simultan bewegt werden, wobei in diesem zweiten Fall die Antriebe (51, 52, 61, 62) abhängig voneinander bewegt werden, wobei im zweiten Fall jeder der n Antriebe mit maximal 1/n der Leistung des Umrichters (71, 72) betrieben wird.

2. Verfahren nach Anspruch 1, wobei im Verfahrensschritt b) der Umrichter auf genau einen Antrieb (51, 52, 61, 62) verschaltet wird.

3. Verfahren nach Anspruch 1 oder 2, wobei das Manipulatorsystem (1; 2) zumindest einen Manipulator (10; 50) umfasst, wobei der Manipulator (10; 50) ein mobiler Manipulator ist, und auf einer mobilen Plattform (20; 60) des Manipulatorsystems angeordnet ist, wobei die mobile Plattform (20; 60) in zumindest einer Richtung und bevorzugt in einer Ebene bewegbar ist und zumindest einen Antrieb (61, 62) umfasst, der von dem ersten Umrichter (71, 72) zum Ansteuern von zumindest zwei Antrieben angesteuert werden kann.

4. Verfahren nach einem der vorhergehenden Ansprüche, wobei jedem der zumindest zwei Antriebe eine Bewegungsachse (A1 - A7, B1 - B4; C1, C2, D1, D2) des Manipulatorsystems (1, 2) zugeordnet ist; und wobei Schritt a) umfasst:
∘ Bestimmen der Achswinkel der Bewegungsachsen (A1 - A7, B1 - B4; C1, C2, D1, D2) die den Antrieben (51, 52, 61, 62) des ersten Umrichters zugeordnet sind, in zumindest einem ersten und einem zweiten Bahnpunkt der geplanten Bewegungsbahn des Manipulatorsystems; und
∘ Ermitteln, ob sich die Achswinkel der Bewegungsachsen (A1 - A7, B1 - B4; C1, C2, D1, D2) im ersten Bahnpunkt vom zweiten Bahnpunkt unterscheiden.

5. Verfahren nach dem vorhergehenden Anspruch, wobei Schritt c) umfasst: Simultanes Ansteuern (104) der mit dem ersten Umrichter verschalteten Antriebe (51, 52, 61, 62) mittels des ersten Umrichters (71, 72), wenn sich die Achswinkel in Betrag und Richtung gleichartig ändern.

6. Verfahren nach einem der vorhergehenden Ansprüche, wobei der zumindest eine dem Manipulatorsystem (1; 2) zugeordnete Umrichter (71, 72) zumindest drei, bevorzugt zumindest vier und am bevorzugtesten zumindest sechs Antriebe ansteuern kann.

7. Verfahren nach einem der vorhergehenden Ansprüche, wobei jedem der Antriebe (51, 52, 61, 62) eine Bewegungsachse (A1 - A7, B1 - B4; C1, C2, D1, D2) des Manipulatorsystems (1, 2) zugeordnet ist, und wobei die jeweilige Bewegungsachse (A1 - A7, B1 - B4; C1, C2, D1, D2) mechanisch blockiert wird, wenn der der jeweiligen Bewegungsachse (A1 - A7, B1 - B4; C1, C2, D1, D2) zugeordnete Antrieb nicht von dem ersten Umrichter (71, 72) angesteuert wird.

8. Verfahren nach einem der vorhergehenden Ansprüche, wobei dem Manipulatorsystem (1; 2) weiterhin zumindest ein zweiter Umrichter (71, 72) zum Ansteuern von zumindest zwei Antrieben zugeordnet ist.

9. Manipulatorsystem umfassend:
eine Manipulatorsteuerungsvorrichtung (30; 70), welche dazu eingerichtet ist, das Verfahren nach einem der Ansprüche 1 bis 8 auszuführen;
zumindest einen Manipulator (10, 50), wobei der Manipulator (10, 50) mehrere Antriebe (51, 52, 61, 62) umfasst, wobei die Antriebe Elektromotoren sind; und
einen ersten Umrichter (71, 72), wobei der erste Umrichter (72, 72) zum Ansteuern von zumindest zwei Antrieben des Manipulatorsystems eingerichtet ist.

10. Manipulatorsystem nach Anspruch 9, wobei das Manipulatorsystem (1; 2) weiterhin eine mobile Plattform (20; 60) umfasst, der zumindest ein Antrieb (61, 62) zugeordnet ist; und wobei
der erste Umrichter (31, 32) zum Ansteuern von einem Antrieb (51, 52) des Manipulators (10; 50) und einem Antrieb (61, 62) der mobilen Plattform (20; 60) eingerichtet ist.

11. Manipulatorsystem nach Anspruch 9, wobei das Manipulatorsystem (1; 2) weiterhin
eine mobile Plattform (20; 60) umfasst, der zumindest zwei Antriebe (61, 62) zugeordnet sind; und wobei
der Manipulator (10; 50) zumindest zwei Antriebe (51, 52) umfasst; und wobei
der erste Umrichter (71, 72) zum Ansteuern von zumindest einem Antrieb (51, 52) des Manipulators (10; 50) und zumindest einem Antrieb (61, 62) der mobilen Plattform (20; 60) eingerichtet ist; und wobei das Manipulatorsystem weiterhin
einen zweiten Umrichter (71, 72) umfasst, wobei der zweite Umrichter zum Ansteuern von zumindest einem weiteren Antrieb (51, 52) des Manipulators (10; 50) und zumindest einem weiteren Antrieb (61, 62) der mobilen Plattform (20; 60) eingerichtet ist.

## Claims

1. A method for controlling a manipulator system (1; 2), wherein the manipulator system (1; 2) comprises multiple drives, and wherein the manipulator system (1; 2) further comprises a first inverter (71, 72) for controlling at least two drives (51, 52, 61, 62), wherein the inverter (71, 72) generates only one control signal, and wherein the method comprises the following method steps:
a) Determining (101) the drives (51, 52, 61, 62) that must be used for executing a planned movement path of the manipulator system (1; 2);
b) Checking whether a determined drive (51, 52, 61, 62) to be used in the planned movement path of the manipulator system (1; 2) is energized by the first inverter (71, 72), and connecting the first inverter (71, 72) to the drive (51, 52, 61, 62) to be used if it is not energized; and
c) Controlling (103) the drive or drives (51, 52, 61, 62) connected to the first inverter by means of the first inverter (71, 72) in order to run the planned movement path of the manipulator system (1; 2), wherein
in a first case, the at least two drives (51, 52, 61, 62) are controlled alternately, and wherein
in a second case, the at least two drives (51, 52, 61, 62) are moved simultaneously, in which second case the drives (51, 52, 61, 62) are moved in dependence on one another, in which second case each of the n drives is operated with at most 1/n of the power of the inverter (71, 72).

2. The method according to claim 1, wherein in method step b) the inverter is connected to exactly one drive (51, 52, 61, 62).

3. The method according to claim 1 or 2, wherein the manipulator system (1; 2) comprises at least one manipulator (10; 50), wherein the manipulator (10; 50) is a mobile manipulator, and is arranged on a mobile platform (20; 60) of the manipulator system, wherein the mobile platform (20; 60) is movable in at least one direction and preferably in one plane and comprises at least one drive (61, 62) which can be controlled by the first inverter (71, 72) for controlling at least two drives.

4. The method according to any one of the preceding claims, wherein a movement axis (A1 - A7, B1 - B4; C1, C2, D1, D2) of the manipulator system (1, 2) is assigned to each of the at least two drives; and wherein step a) comprises:
∘ determining the axis angles of the movement axes (A1 - A7, B1 - B4; C1, C2, D1, D2) assigned to the drives (51, 52, 61, 62) of the first inverter, in at least a first and a second path point of the planned movement path of the manipulator system; and
∘ determining whether the axis angles of the movement axes (A1 - A7, B1 - B4; C1, C2, D1, D2) in the first path point differ from the second path point.

5. The method according to the preceding claim, wherein step c) comprises: Simultaneously controlling (104) the drives (51, 52, 61, 62) connected to the first inverter by means of the first inverter (71, 72) when the axis angles change in magnitude and direction in the same way.

6. The method according to any one of the preceding claims, wherein the at least one inverter (71, 72) is assigned to the manipulator system (1; 2) can control at least three, preferably at least four, and most preferably at least six drives.

7. The method according to one of the preceding claims, wherein to each of the drives (51, 52, 61, 62) a movement axis (A1 - A7, B1 - B4; C1, C2, D1, D2) of the manipulator system (1, 2) is assigned, and wherein the respective movement axis (A1 - A7, B1 - B4; C1, C2, D1, D2) is mechanically blocked if the drive assigned to the respective movement axis (A1 - A7, B1 - B4; C1, C2, D1, D2) is not controlled by the first inverter (71, 72).

8. The method according to any one of the preceding claims, wherein at least one second inverter (71, 72) for controlling at least two drives is further associated with the manipulator system (1; 2).

9. A manipulator system comprising:
a manipulator control device (30; 70) that is configured to perform the method according to any one of claims 1 to 8;
at least one manipulator (10, 50), wherein the manipulator (10, 50) comprises multiple drives (51, 52, 61, 62), wherein the drives are electric motors; and
a first inverter (71, 72), wherein the first inverter (72, 72) is adapted to control at least two drives of the manipulator system.

10. The manipulator system according to claim 9, wherein the manipulator system (1; 2) further comprises a mobile platform (20; 60) to which at least one drive (61, 62) is associated; and wherein
the first inverter (31, 32) is configured to control a drive (51, 52) of the manipulator (10; 50) and a drive (61, 62) of the mobile platform (20; 60).

11. The manipulator system according to claim 9, wherein the manipulator system (1; 2) further comprises
a mobile platform (20; 60) to which at least two drives (61, 62) are associated; and wherein
the manipulator (10; 50) comprises at least two drives (51, 52); and wherein
the first inverter (71, 72) is configured to control at least one drive (51, 52) of the manipulator (10; 50) and at least one drive (61, 62) of the mobile platform (20; 60); and wherein the manipulator system further comprises
a second inverter (71, 72), wherein the second inverter is configured for controlling at least one further drive (51, 52) of the manipulator (10; 50) and at least one further drive (61, 62) of the mobile platform (20; 60).

## Revendications

1. Procédé de commande d'un système de manipulateur (1 ; 2), le système de manipulateur (1 ; 2) incluant plusieurs moyens d'entraînement, et le système de manipulateur (1; 2) comportant en outre un premier convertisseur (71, 72) pour commander au moins deux moyens d'entraînement (51, 52, 61, 62), le convertisseur (71, 72) ne produisant qu'un signal de commande, et le procédé incluant les étapes de procédé suivantes :
a) détermination (101) des moyens d'entraînement (51, 52, 61, 62) qui doivent être utilisés pour exécuter une trajectoire de déplacement planifiée du système de manipulateur (1 ; 2) ;
b) vérification si un moyen d'entraînement déterminé (51, 52, 61, 62) qui doit être utilisé lors de la trajectoire de déplacement planifiée du système de manipulateur (1 ; 2) est alimenté par le premier convertisseur (71, 72), et branchement du premier convertisseur (71, 72) sur le moyen d'entraînement à utiliser (51, 52, 61, 62) si celui-ci n'est pas alimenté, et
c) commande (103) du, respectivement des moyen d'entraînement, respectivement moyens d'entraînement (51, 52, 61, 62) branchés sur le premier convertisseur, au moyen du premier convertisseur (71, 72) afin de parcourir la trajectoire de déplacement planifiée du système de manipulateur (1 ; 2), dans lequel :
dans un premier cas, les au moins deux moyens d'entraînement (51, 52, 61, 62) sont commandés en alternance, et
dans un second cas, les au moins deux moyens d'entraînement (51, 52, 61, 62) sont déplacés simultanément, dans ce second cas les moyens d'entraînement (51, 52, 61, 62) étant déplacés de manière dépendante l'un de l'autre, dans le second cas chacun des n moyens d'entraînement étant exploité avec au maximum 1/n de la puissance du convertisseur (71, 72).

2. Procédé selon la revendication 1, dans lequel à l'étape de procédé b) le convertisseur est exactement branché sur un moyen d'entraînement (51, 52, 61, 62).

3. Procédé selon la revendication 1 ou 2, dans lequel le système de manipulateur (1; 2) inclut au moins un manipulateur (10 ; 50), le manipulateur (10 ; 50) étant un manipulateur mobile et étant disposé sur une plate-forme mobile (20 ; 60) du système de manipulateur, la plate-forme mobile (20 ; 60) étant déplaçable dans au moins une direction et préférentiellement dans un plan et incluant au moins un moyen d'entraînement (61, 62) qui peut être commandé par le premier convertisseur (71, 72) pour commander au moins deux moyens d'entraînement.

4. Procédé selon une des revendications précédentes, dans lequel à chacun des au moins deux moyens d'entraînement est associé un axe de déplacement (A1 - A7, B1 - B4 ; C1, C2, D1, D2) du système de manipulateur (1, 2), et l'étape a) inclut :
∘ la définition de l'angle axial des axes de déplacement (A1 - A7, B1 - B4 ; C1, C2, D1, D2) qui sont associés aux moyens d'entraînement (51, 52, 61, 62) du premier convertisseur dans au moins un premier et un second point de trajectoire de la trajectoire de déplacement planifiée du système de manipulateur ; et
∘ la détermination si les angles axiaux des axes de déplacement (A1 - A7, B1 - B4 ; C1, C2, D1, D2) au premier point de trajectoire se différencient du second point de trajectoire.

5. Procédé selon la revendication précédente, dans lequel l'étape c) inclut :
une commande simultanée (104) des moyens d'entraînement (51, 52, 61, 62), branchés sur le premier convertisseur, au moyen du premier convertisseur (71, 72) lorsque les angles axiaux varient de la même manière en valeur et en direction.

6. Procédé selon une des revendications précédentes, dans lequel le au moins un convertisseur (71, 72) associé au système de manipulateur (1 ; 2) peut commander au moins trois, préférentiellement au moins quatre et, le plus préférentiellement, au moins six moyens d'entraînement.

7. Procédé selon une des revendications précédentes, dans lequel à chacun des moyens d'entraînement (51, 52, 61, 62) est associé un axe de déplacement (A1 - A7, B1 - B4 ; C1, C2, D1, D2) du système de manipulateur (1, 2), et l'axe de déplacement respectif (A1 - A7, B1 - B4 ; C1, C2, D1, D2) est bloqué mécaniquement lorsque le moyen d'entraînement associé à l'axe de déplacement respectif (A1 - A7, B1 - B4 ; C1, C2, D1, D2) n'est pas commandé par le premier convertisseur (71, 72).

8. Procédé selon une des revendications précédentes, dans lequel au système de manipulateur (1 ; 2) est en outre associé au moins un second convertisseur (71, 72) pour commander au moins deux moyens d'entraînement.

9. Système de manipulateur incluant :
un dispositif de commande de manipulateur (30 ; 70) qui est agencé pour exécuter le procédé selon une des revendications 1 à 8 ;
au moins un manipulateur (10, 50), le manipulateur (10, 50) incluant plusieurs moyens d'entraînement (51, 52, 61, 62), les moyens d'entraînement étant des moteurs électriques ; et
un premier convertisseur (71, 72), le premier convertisseur (71, 72) étant agencé pour commander au moins deux moyens d'entraînement du système de manipulateur.

10. Système de manipulateur selon la revendication 9, dans lequel le système de manipulateur (1 ; 2) inclut en outre une plate-forme mobile (20 ; 60) à laquelle est associé au moins un moyen d'entraînement (61, 62) ; et dans lequel le premier convertisseur (31, 32) est agencé pour commander un moyen d'entraînement (51, 52) du manipulateur (10 ; 50) et un moyen d'entraînement (61, 62) de la plate-forme mobile (20; 60).

11. Système de manipulateur selon la revendication 9, dans lequel le système de manipulateur (1 ; 2) inclut en outre une plate-forme mobile (20 ; 60) à laquelle sont associés au moins deux moyens d'entraînement (61, 62) ; et dans lequel
le manipulateur (10 ; 50) inclut au moins deux moyens d'entraînement (51, 52) ; et
le premier convertisseur (71, 72) est agencé pour commander au moins un moyen d'entraînement (51, 52) du manipulateur (10 ; 50) et au moins un moyen d'entraînement (61, 62) de la plate-forme mobile (20 ; 60) ; et dans lequel le système de manipulateur inclut en outre
un second convertisseur (71, 72), le second convertisseur étant agencé pour commander au moins un moyen d'entraînement supplémentaire (51, 52) du manipulateur (10 ; 50) et au moins un moyen d'entraînement supplémentaire (61, 62) de la plate-forme mobile (20 ; 60).
